# FASCICULE DE BREVET EUROPEEN

(11) **EP 1 698 649 B1**
(45) Date de publication et mention de la délivrance du brevet: **21.08.2013**
(21) Numéro de dépôt: 06300101.0
(22) Date de dépôt: 02.02.2006
(51) Int. Cl.: C08G 18/40, F17C 3/04, C08K 7/14, B29C 44/32, C08J 9/00, C08J 9/12

(54) **Mousse de polyuréthanne/polyisocyanurate renforcée de fibres de verre**
Mit Glasfasern verstärkter Polyurethan-Polyisocyanuratschaum
Glassfiber-reinforced polyurethane-polyisocyanurate foam

(30) Priorité: 04.03.2005 FR 0502227; 28.10.2005 FR 0511111
(43) Date de publication de la demande: 06.09.2006
(73) Titulaire: Gaz Transport et Technigaz, 78470 Saint-Rémy-Lès-Chevreuse (FR)
(72) Inventeur: Moerman, Marc, 78470, Saint-Rémy-Lès-Chevreuse (FR); Guelton, Bruno, 50480, Ecoqueneauville (FR); Dhellemmes, Jacques, 78000, Versailles (FR)
(74) Mandataire: Abello, Michel

(56) Documents cités:
- EP-A- 0 248 721
- FR-A- 2 206 292
- US-A- 4 680 214
- US-A1- 2003 034 578

## Description

La présente invention concerne une mousse de polyuréthanne/polyisocyanurate (PUIR) rigide renforcée par des fibres de verre, son procédé de fabrication et son utilisation comme matériau d'isolation des cuves de transport de gaz liquéfié et particulièrement des cuves de méthaniers.

On connaît, notamment par les brevets européens n° 248 721 et n° 573 327, des éléments d'isolation de cuves de transport de gaz liquéfié, utilisés dans des méthaniers, composés de caissons de bois contreplaqué remplis d'un matériau isolant type mousse de polyuréthanne. Les éléments d'isolation sont répartis en deux barrières d'isolation dites couches primaire et secondaire d'isolation. Ces éléments d'isolation confèrent une isolation thermique satisfaisante mais nécessitent cependant un temps de pose conséquent car les caissons constituant chaque couche primaire et secondaire doivent être non seulement fixées à la cuve mais également solidarisés entre eux afin de constituer les différentes couches d'isolation thermique.

Par ailleurs, de nombreuses mousses rigides de type polyuréthanne (PUR) ont été développées pour des utilisations comme matériau d'isolation. Ce type de matériau présente des caractéristiques d'isolation thermique satisfaisantes pour une telle utilisation et demeure facile à manipuler et à installer. Cependant, les mousses PUR ne peuvent pas, sans être incorporées à des caissons de bois contreplaqué, convenir à l'isolation thermique des cuves de méthaniers, car elles ne présentent pas des caractéristiques de résistance mécanique du type résistance à la compression et à la traction suffisantes pour résister à la pression du gaz liquéfié en mouvement dans la cuve et aux variations brutales de température.

De plus, ce type de matériau incorpore généralement comme agent d'expansion, des gaz relativement nocifs pour l'environnement, notamment de l'hydrochlorofluorocarbure HCFC 141b dont l'utilisation est interdite en Europe depuis le 1^{er} janvier 2004.

Ce type de gaz est avantageusement remplacé par des hydrocarbures tels que le pentane ou l'isopentane. Cependant, ces derniers demeurent des gaz hautement inflammables. En outre, l'utilisation de tels hydrocarbures empêcherait une éventuelle détection de fuites de gaz de la cuve de transport de gaz liquéfié.

Il est par ailleurs connu du document US 4 680 214 un procédé de fabrication d'une mousse de polyuréthane renforcée de fibres comportant la mise en contact d'un polyisocyanate et d'un composant multi-polyols comprenant entre 50 et 75 parties en poids de polyol rigide, entre 20 à 50 parties en poids de polyol de polyester aromatique et entre 1 à 20 parties en poids de polyol flexible. L'index d'isocyanate est compris entre 100 et 500. La densité de la mousse obtenue est comprise entre environ 400 et 720 kg/m³.

L'invention a pour but de proposer une mousse qui évite les inconvénients précités et qui présente à la fois de bonnes caractéristiques d'isolation thermique et des caractéristiques mécaniques du type résistance à la compression en Z (c'est-à-dire dans le sens de l'épaisseur de la mousse) à chaud (20°C) et à froid (-170°C), et des caractéristiques mécaniques du type résistance à la traction en Y (c'est-à-dire dans le sens de la longueur de la mousse) à chaud et à froid satisfaisantes, ces caractéristiques lui permettant notamment d'être utilisée comme matériau d'isolation thermique des cuves de méthaniers.

L'invention a pour objet une mousse de polyuréthanne/polyisocyanurate renforcée par des fibres de verre, étant obtenue :
1) par la mise en contact :
   - d'un composant isocyanate présentant une viscosité comprise entre 200 et 600 mPa.s,
   - d'un composant polyol comportant un premier polyol, un deuxième polyol et un troisième polyol, lesdits polyols présentant une viscosité comprise entre 200 et 6000 mPa.s,
   en présence :
   - de catalyseurs choisis parmi les sels d'étain, les carboxylates de potassium et éventuellement les amines tertiaires,
   - d'un agent d'expansion physique et/ou chimique,
   - d'un émulsifiant et
   - éventuellement d'un retardeur de flamme,
2) par l'imprégnation, par la formulation issue de l'étape 1), d'un empilement de fibres de verre, éventuellement sous la forme de mats, et éventuellement associées par un liant et
3) par l'expansion et la solidification de ladite formulation de façon à former un bloc de mousse renforcée contenant l'empilement de fibres de verre ;
ledit bloc de mousse renforcée présentant une masse volumique moyenne comprise entre 115 et 135 kg/m³, de préférence entre 120 et 130 kg/m³, plus avantageusement autour de 130 kg/m³ et un indice isocyanate compris entre 100 et 180, de préférence entre 130 et 180.

Selon une caractéristique de la présente invention, ledit composant isocyanate est du diisocyanate de méthylène diphényle (MDI) présentant une fonctionnalité moyenne comprise entre 2,5 et 3,5, de préférence entre 2,9 et 3,1.

Selon une autre caractéristique de l'invention, ledit premier polyol est un dérivé du sorbitol, ledit deuxième polyol est un polyol de type polyéther, et ledit troisième polyol est un polyol de type polyester. Avantageusement, le polyol de type polyéther est de préférence un dérivé du glycérol et le polyol de type polyester est de préférence de type aromatique.

De manière préférentielle, ledit composant polyol est constitué desdits premier, deuxième et troisième polyols, en ce que ledit premier polyol est compris dans des proportions de 10 à 80% en masse par rapport à la masse dudit composant polyol, en ce que ledit deuxième polyol est compris dans des proportions de 10 à 80% en masse par rapport à la masse dudit composant polyol et en ce que ledit troisième polyol est compris dans des proportions de 10 à 80% en masse par rapport à la masse dudit composant polyol.

Avantageusement, les proportions en masse des premier, deuxième et troisième polyols par rapport à la masse dudit composant polyol sont de 60%, 20% et 20% respectivement.

La mousse présente ainsi, grâce à la formulation de l'invention, à la fois des caractéristiques d'isolation thermique satisfaisantes et, de manière surprenante, des caractéristiques mécaniques de résistance à la compression et à la traction lui permettant ainsi d'être éventuellement utilisée comme matériau d'isolation de cuve de méthanier. De plus, la formulation de l'invention permet une imprégnation complète et homogène de l'empilement de fibres de verre.

Selon une deuxième caractéristique de l'invention, lesdits catalyseurs sont choisis parmi les sels d'étain et les carboxylates de potassium, à l'exclusion des amines tertiaires. Ainsi, dans la mousse de l'invention, l'utilisation de catalyseurs à base d'amines tertiaires peut être évitée ce qui présente un avantage car les amines tertiaires sont irritantes, donc désagréables à manipuler, et nocives pour l'environnement.

Selon une troisième caractéristique de l'invention, ledit agent d'expansion est de l'eau. Ainsi, grâce à cette caractéristique, il n'est plus nécessaire d'utiliser des gaz tels que les chlorofluorocarbones du type 141b qui sont nocifs pour l'environnement et interdits en Europe depuis le 1^{er} janvier 2004 ou des gaz hautement inflammables tels que le pentane. En effet, la présence d'eau comme agent d'expansion induit le dégagement de CO₂ qui fait gonfler la mousse. Le CO₂ présente l'avantage d'être moins nocif pour l'environnement et de ne pas être inflammable.

Selon une variante, ledit agent d'expansion est du HCF-365mfc ou du HCF-245fa. En outre, l'utilisation de HCF-365mfe et/ou du HCF-245fa peut être combinée à l'utilisation de l'eau en tant qu'agent d'expansion.

Selon une autre variante, ledit retardeur de flamme est de type non halogéné. Ainsi, contrairement à un retardeur de flamme de type halogéné, l'incorporation de ce type de retardeur de flamme dans une composition n'a aucune action néfaste pour l'environnement.

Selon un premier mode de réalisation, ledit empilement de fibres de verre est sous forme d'un empilement de mats de fibres de verre. Les mats de fibres verre sont avantageusement du type « continuous strand mat » (CSM).

Avantageusement, dans le premier mode de réalisation, les fibres de verre présentent une masse linéique de 20 à 40 Tex, de préférence 30 Tex.

Selon un second mode de réalisation, ledit empilement de fibres de verre comporte des fibres de verre continues fabriquées à partir de roving.

Préférentiellement, dans le second mode de réalisation, les fibres de verre présentent une masse linéique de 30 à 300 Tex.

De manière avantageuse, la fabrication desdites fibres de verre continues est réalisée par un procédé comportant une étape de séparation de roving en fibres de verre continues de masse linéique inférieure à celle du roving, par exemple par le procédé de « Webforming » mis au point par Plastech T. T. Ldt. Le second mode de réalisation est plus avantageux que le premier car il implique tout d'abord une meilleure mouillabilité des fibres de verre. Cette caractéristique a pour conséquence tout d'abord une imprégnation plus homogène des fibres de verre. En outre, les blocs de mousse selon le second mode de réalisation présentent également des propriétés mécaniques satisfaisantes en traction et en compression selon l'ensemble des axes. Enfin, les fibres de verre proviennent de bobines ou de pelotes de roving dont l'approvisionnement est plus facile et les coûts d'achat inférieurs à ceux des mats de fibres de verre.

Selon une variante du premier ou du second mode de réalisation, lesdites fibres de verre associées entre elles par un liant.

Avantageusement, dans cette variante de réalisation, la teneur en ledit liant est comprise entre 0,6 et 3%, de préférence autour de 2,5% en masse desdites fibres de verre. Cette teneur en liant est avantageuse pour que l'imprégnation des fibres de verre soit uniforme et complète.

Préférentiellement dans le second mode de réalisation, lesdites fibres de verre ne sont pas associées par un liant. Ainsi, lorsque peu (<0,6%) ou pas de liant est utilisé, les fibres de verre sont réparties de manière plus uniforme au sein du bloc de mousse renforcée, cc qui confère au bloc de mousse renforcée de meilleures caractéristiques mécaniques.

De manière avantageuse, dans l'ensemble des modes de réalisation, les fibres de verre sont de type E.

Préférentiellement, ledit empilement de fibres de verre présente une masse surfacique comprise entre 300 à 900 g/m², de préférence de 450 g/m².

Dans une variante avantageuse du premier ou du second mode de réalisation, les fibres de verre constituent 9 à 13%, de préférence de 10 à 12% en masse par rapport à la masse totale du bloc de mousse renforcée.

L'ensemble des paramètres susmentionnés concernant les mats de fibres de verre et les fibres de verre elles-mêmes est également favorable à une imprégnation satisfaisante des fibres de verre et s'est avéré conférer à la mousse des caractéristiques du type résistance à la traction (c'est-à-dire à l'allongement) satisfaisantes.

De manière avantageuse, l'inflammabilité est conforme au test DIN 4102-1 (B2).

Selon un mode de réalisation préféré, la mousse se présente sous la forme d'un bloc de mousse d'une épaisseur comprise entre 20 et 35 cm. Ainsi, selon l'utilisation souhaitée, par exemple comme matériau d'isolation, une quantité suffisante de formulation, de fibres de verre, éventuellement sous forme de mats, et d'agent d'expansion va être définie de façon à préparer un bloc de mousse avec une épaisseur souhaitée. L'avantage de préparer des blocs de mousse d'une épaisseur 20 cm est que, après ébavurage, les blocs de mousse peuvent directement être utilisés comme couche d'isolation secondaire de méthanier, qui présente habituellement une épaisseur de 18 cm, et/ou découpés transversalement au niveau de leur moitié pour former directement un couche d'isolation primaire de méthanier, qui présente habituellement une épaisseur de 9 cm. De même, un bloc de mousse préparé avec une épaisseur de 30 cm, pourra, après ébavurage et découpe au tiers de son épaisseur, former simultanément une couche d'isolation primaire de 9 cm et une couche d'isolation secondaire de 18 cm.

L'invention a également pour objet un procédé de fabrication d'une mousse de polyuréthanne/polyisocyanurate renforcée par des fibres de verre comportant les étapes consistant à :
1) mettre en contact :
   - un composant isocyanate présentant une viscosité comprise entre 200 et 600 mPa.s,
   - un composant polyol comportant un premier polyol, et un deuxième polyol et un troisième polyol, lesdits polyols présentant une viscosité comprise entre 200 et 6000 mPa.s, en présence :

   - de catalyseurs choisis parmi les sels d'étain, les carboxylates de potassium et éventuellement les amines tertiaires,
   - d'un agent d'expansion,
   - d'un émulsifiant
   - éventuellement d'un rctardcur de flamme,
2) imprégner, par la formulation issue de l'étape 1), un empilement de fibres de verre, éventuellement sous forme de mats, éventuellement associées entre-elles par un liant,
3) laisser solidifier ladite formulation après expansion de façon à former un bloc de mousse contenant l'empilement de fibres de verre ;
4) ébavurer les parties supérieure, inférieure et éventuellement latérales dudit bloc de mousse et éventuellement
5) découper ledit bloc de mousse transversalement, de façon à obtenir une couche primaire d'isolation et une couche secondaire d'isolation.

Enfin, l'invention a pour objet l'utilisation de la mousse dans l'isolation thermique de cuves de transport de gaz liquéfié, et notamment de cuves de méthanier.

Le terme "PUIR" signifie dans la description détaillée qui va suivre "polyuréthanne/polyisocyanurate". Le terme "basse viscosité" signifie pour l'isocyanate une viscosité comprise entre 200 et 600 mPa.s et pour les polyols une viscosité comprise entre 200 et 6 000 mPa.s, toutes les valeurs de viscosité étant données pour une température de 25°C. Enfin, le terme "indice PUIR" désigne le rapport molaire [(groupement -NCO du polyisocyanurate/groupement -OH du polyuréthanne) ×100].

Enfin, dans la description qui suit, le terme « empilement de fibres de verre » désigne selon le cas soit un empilement de mats de fibres de verre (premier mode de réalisation), soit un empilement de fibres de verre fabriquées à partir de roving (second mode de réalisation).

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence notamment aux dessins schématiques annexés.

Sur ces dessins, qui illustrent un procédé de fabrication de l'empilement de fibres de verre selon le second mode de réalisation :
- la figure 1 est une vue en perspective d'une bobine de roving, le roving étant utilisé comme matériau de base ;
- la figure 2 est une vuc en perspective d'un cabestan d'alimentation, le cabestan d'alimentation étant un élément intermédiaire entre la bobine de roving et la tête de distribution des fibres de verre et
- la figure 3 est une vue en perspective d'une chaîne de fabrication de fibres de verre.

Selon la présente invention, la mousse de PUIR est formée par la réaction d'un composant isocyanate et d'un composant polyol constitué d'un mélange de polyols. La réaction entre ces différents composés se déroule selon les quatre étapes suivantes :

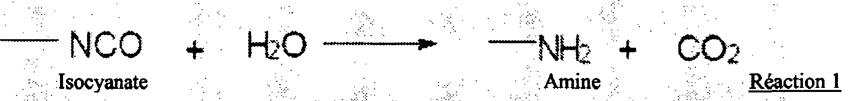

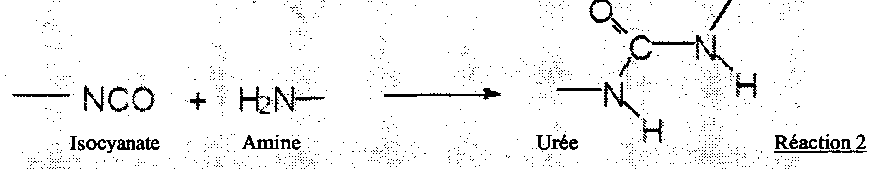

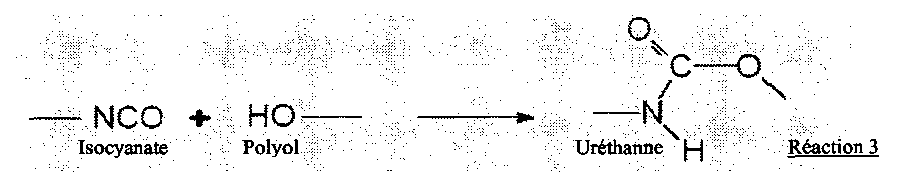

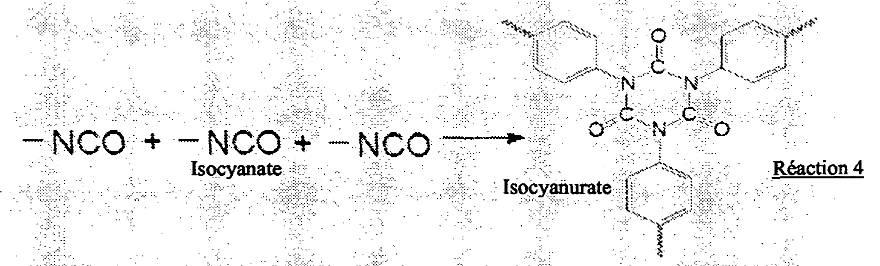

La première étape, dite étape d'initiation, est l'étape dans laquelle les molécules d'eau réagissent avec les groupements -NCO du composant isocyanate pour former des groupements amines et des molécules de CO₂. Le dégagement de CO₂ implique le gonflement de la mousse.

Dans la deuxième étape, les groupements amine issus de la deuxième étape réagissent avec les groupements -NCO pour former des groupements urée.

Parallèlement, lors de la troisième étape, les groupements hydroxyle du composant polyol réagissent avec les groupements NCO pour former des groupements uréthanne.

Enfin, lors la quatrième étape, dite de trimérisation, les groupements -NCO en excès s'associent par trois pour former des groupements isocyanurate.

Les étapes sont exothermiques et induisent l'expansion du CO₂ et ainsi le gonflement de la mousse.

La formulation issue du mélange du composant isocyanate, du composant polyol et de divers additifs est immédiatement déversée sur un empilement de fibres de verre comportant une épaisseur définie ou un nombre défini de mats de fibres de verre avant que les réactions susmentionnées ne débutent.

Lorsque la réaction débute, elle ne devient visible au niveau macroscopique qu'au bout d'une certaine durée appelée temps de crémage.

Le temps de crémage est ajusté par la nature et la concentration en catalyseur de façon à ce que la réaction débute uniquement après imprégnation totale et homogène de l'empilcment de fibres de verre ou des mats de fibres de verre par la formulation. Le temps de crémage est généralement compris entre 90 et 120 secondes.

Ensuite, la réaction se manifeste par un gonflement général de la mousse induite par le dégagement interne de CO₂.

Selon la présente invention, il est préférable d'utiliser un composant isocyanate dont la viscosité est, comme énoncé plus haut, préférentiellement comprise entre 200 et 600 mPa.s, de préférence inférieure à 300 mPa.s. Les composés isocyanate sont de formule : R(NCO)ₙ dans laquelle n est > 2 et R représente un groupement aliphatique ou aromatique. Préférentiellement un diisocyanate, et plus préférentiellement un diisocyanate de méthylène diphénylc (MDI) est utilisé.

La fonctionnalité du composant isocyanate est préférentiellement comprise entre 2,5 et 3,5 et est avantageusement entre 2,7 et 3,1. La fonctionnalité est définie par le nombre de groupements -NCO moyens présents dans chaque molécule de composant isocyanate.

Le pourcentage de groupements NCO, défini par le rapport en masse des groupements -NCO/100 grammes de composant isocyanate, est avantageusement compris entre 28 et 32 %.

Le diisocyanate de méthylène diphényle non distillé ou brut peut être couramment utilisé. Ce produit est couramment disponible sur le marché sous la marque Suprasec commercialisé par Hunstman.

Dans le cadre de la présente invention, le composant polyol comprend un mélange de trois polyols dont la viscosité est comprise entre 200 et 6000 mPa.s.

La viscosité du composant polyol est préférentiellement comprise entre 1 000 et 3 000 mPa.s.

La réactivité des polyols est définie par différents paramètres tels que la fonctionnalité, l'indice OH et l'aromaticité.

Les polyols préférés présentent une fonctionnalité comprise entre 2 et 6.

L'indice d'hydroxyle (indice OH) des polyols avantageusement utilisés, défini par le rapport massique (mg KOH/g de polyols), est avantageusement compris entre 200 et 500 mg KOH/g polyols.

La détermination de l'indice OH permet d'apprécier l'efficacité de réticulation de la formulation.

Des exemples représentatifs des polyols dérivés du sorbitol, sont par exemple les polyols de la marque Daltolac de Huntsman. L'indice OH est préférentiellement de 500 pour le polyol de type dérivé du sorbitol.

Des exemples représentatifs de polyols de type polyéther sont par exemple les produits dérivés dérivés du glycérol dont les chaînes latérales sont étendues par de l'oxyde de propylène, tels que ceux commercialisés par Shell Chemicals sous la marque Caradol. L'indice OH est préférentiellement de 250 pour le deuxième polyol.

Des exemples représentatifs de polyols de type polyester sont les polyols polyester aliphatiques ou préférentiellement les polyols polyester aromatiques tels que les dérivés de l'anhydride phtalique. Dans le cadre de la présente invention, les dérivés d'ortho-phtalate de diéthylène glycol, par exemple le produit commercialisé par Stepan sous la marque StepanPol sont préférentiellement utilisés. L'indice OH est préférentiellement de 250 pour le troisième polyol.

L'avantage d'utiliser un polyol polyester, généralement utilisé dans la fabrication des mousses de polyuréthanne, permet d'obtenir une mousse PUIR présentant des caractéristiques mécaniques à chaud et de résistance à l'inflammabilité importantes.

L'avantage d'utiliser un polyol de type polyéther, généralement utilisé dans la fabrication des mousses de polyisocyanurate, réside dans le fait que ce type de polyol confère à la mousse PUIR une meilleure résistance mécanique à froid et une meilleure imprégnation de l'empilement de fibres de verre ou des mats de fibres de verre par la formulation.

En outre, dans le cadre de la présente invention, l'indice isocyanate précédemment défini dépend des proportions de composants isocyanate et polyols introduites dans la formulation.

Lorsque l'indice isocyanate est compris environ entre 95 et 110, la mousse issue de cette formulation est de type polyuréthanne (PUR). Lorsque l'indice isocyanate est supérieur à 200, c'est-à-dire quand il y a un excès de groupements -NCO, la mousse issue de cette formulation est de type polyisocyanurate (PIR). Lorsque l'indice isocyanate est compris entre 110 et 200, les mousses issues de la formulation présentent à la fois des caractéristiques d'une mousse de polyuréthanne et d'une mousse de polyisocyanate et sont appelées mousses de polyuréthanne/polyisocyanwate (PUIR).

Dans le cadre de la présent invention, la formulation comprend également des additifs couramment utilisés dans la préparation de mousses PUIR tels que un ou plusieurs catalyseurs, agents d'expansion, émulsifiants, retardeurs de flamme.

Les catalyseurs peuvent être les catalyseurs de gélification, d'expansion, de durcissement et de trimérisation couramment utilisés dans la préparation des mousses PUIR. Des catalyseurs particulièrement intéressants dans le cadre de la présente invention sont par exemple les catalyseurs organométalliques tels que les catalyseurs stanniques, par exemple les carboxylates d'étain IV, en particulier l'octanoate d'étain ; et les carboxylates de potassium, en particulier l'octanoate de potassium. Les amines tertiaires peuvent également être utilisées.

Avantageusement, des catalyseurs à base d'étain et de type octanoate de potassium sont utilisés simultanément en l'absence de catalyseurs de type amine.

Les catalyseurs à base d'étain sont par exemple ceux du type DBTDL commercialisés par Air Products sous la marque Dabco et sont avantageusement utilisés dans une proportion comprise entre 0,01 et 1 % en masse de la masse totale des polyols (c'est-à-dire du composant polyol).

Les catalyseurs de type octanoate de potassium sont par exemple ceux commercialisés par Air Products également sous la marque Dabco et sont avantageusement utilisés dans une proportion comprise entre 0,1 et 2 % en masse de la masse totale des polyols.

Les catalyseurs de type amine sont par exemple ceux commercialisés par Air Products sous la marque Polycat et sont avantageusement utilisés dans une proportion comprise entre 0,01 et 1 % en masse de la masse totale des polyols.

Les catalyseurs sont utilisés pour accélérer une ou plusieurs des différentes étapes réactionnelles susmentionnées. Par exemple, les catalyseurs stanniques et les amines tertiaires agissent préférentiellement sur les étapes 1 à 3, tandis que les catalyseurs à base d'octanoate de potassium agissent préférentiellement sur la réaction de trimérisation (étape 4).

La quantité et la nature des catalyseurs introduites dans la formulation influencent directement la vitesse de la réaction donc le temps de crémage.

Les proportions de catalyseurs introduites peuvent cependant varier. En effet, lorsque la masse surfacique ou la proportion de liant au sein de l'empilement de fibres de verre ou de mats de fibres de verre augmente, la proportion de catalyseurs introduite dans ladite formulation doit être diminuée de façon à retarder le temps de crémage pour que ladite formulation puisse imprégner uniformément l'empilement de fibres de verre ou de mats de fibres de verre avant le début de la réaction.

Par conséquent, la réactivité et la viscosité de la formulation dépendent de la réactivité des polyols, mais également de la teneur et de la nature des catalyseurs.

La formulation comporte en outre un ou plusieurs agents d'expansion qui peuvent être physiques ou chimiques.

Les agents d'expansion physiques préférentiellement utilisés sont les composés pentafluorobutane non chlorés et en particulier le 1,1,1,3,3-pentafluorobutane également connu sous le nom de HFC-365mfc notamment de la marque Solkane 365 commercialisé par Solvay et le HFC-245fc de la marque Enovatc 3000 commercialisé par Honeywell.

L'agent d'expansion chimique préférentiellement utilisé est l'eau.

Les agents d'expansion physiques et chimiques susmentionnés peuvent être utilisés individuellement ou simultanément.

La quantité préférentielle d'agent d'expansion physique est calculée en fonction de la masse volumique de la mousse PUIR renforcée souhaitée. Elle est préférentiellement comprise entre 0 et 10 de préférence autour de 5% en masse par rapport à la masse totale du composant polyol.

La quantité préférentielle d'eau utilisée dépend de la masse volumique totale de la mousse de PUIR souhaitée. La proportion d'eau dans la composition est préférentiellement comprise entre 0 et 1%, de préférence sensiblement de 1% par rapport à la masse totale du composant polyol.

Les agents d'expansion permettent le moussage de la formulation. La nature des agents d'expansion influence les propriétés d'isolation thermique de la mousse. L'eau est préférentiellement utilisée comme agent d'expansion car elle induit un dégagement de CO₂ qui est un agent d'expansion moins nocif pour l'environnement que les agents d'expansion classiques. De plus, le CO₂ n'empêche pas la détection de fuite éventuelle au sein des parois de la cuve de méthanier.

Enfin, il est préférable d'utiliser un émulsifiant qui peut être de nature siliconée ou non siliconée. Un exemple d'émulsifiant de nature siliconée est par exemple l'émulsifiant commercialisé par Goldsmith sous la marque Tegostab 8804. Ce type d'émulsifiant est avantageusement utilisé dans la formulation à environ 1 % en masse de la masse totale des polyols. Un exemple d'émulsifiant de nature non siliconée est par exemple l'émulsifiant commercialisé par Goldsmith sous la marque LK443. Ce type d'émulsifiant est avantageusement utilisé dans la formulation dans des proportions comprises entre 0,5 et 3% en masse de la masse totale des polyols.

Les émulsifiants sont utilisés pour solubiliser l'agent d'expansion et pour stabiliser les cellules.

En plus des composants critiques susmentionnés, il est souvent souhaitable d'employer d'autres composants dans la formulation de la présente invention.

Un retardeur de flamme est également avantageusement utilisé dans le cadre de la présente invention pour limiter davantage l'inflammabilité de la mousse. Le retardeur de flamme peut être halogéné, par exemple du TCPP par exemple commercialisé par Akzo Nobel, ou préférentiellement non halogéné, par exemple du type Levargard-TEP de Lanxess. Le retardeur de flamme est préférentiellement utilisé dans des proportions d'environ 5% à 20% en masse de la masse totale des polyols.

D'autres additifs tels que des charges, des agents de réticulation, des colorants peuvent avantageusement être rajoutés à la formulation.

Une fois la formulation issue du mélange de l'isocyanate, des polyols et des divers additifs préparée, ladite formulation est rapidement versée sur un empilement de fibres de verre ou de mats de fibres de verre de façon que la formulation imprègne la totalité de l'épaisseur de l'empilement des fibres de verre ou des mats de fibres de verre. La mousse renforcée ainsi obtenue présente une masse volumique moyenne de 115 à 135 kg/m³ et préférentiellement de 120 à 130 kg/m³, plus avantageusement autour de 130 kg/m³.

Les mats de fibres de verre préférentiellement utilisés selon un premier mode de réalisation sont constitués de mats de fibres de verre continus (continuous strand mat) notamment commercialisés par Vetrotex sous la marque Unifilo ou commercialisés par Owens Corning sous la marque Advantex.

Ces fibres de verre sont assemblées entre elles par un liant préférentiellement présent en une teneur de 0,6 à 3% en masse de la masse totale du mat de fibres de verre et préférentiellement sensiblement autour de 2,5%. Le liant utilisé pour l'ensimage des fibres de verre est préférentiellement une résine époxy.

Les fibres de verre constituant les mats préférentiellement utilisées présentent une masse linéique de 20 à 40 Tex, c'est-à-dire de 20 à 40 g/km de fibres.

Les mats de fibres de verre présentent une masse surfacique préférentiellement comprise entre 300 et 900 g/m² et, plus avantageusement, entre 300 et 600 g/m², plus préférentiellement aux environs de 450 g/m². Les fibres de verre constituent préférentiellement 6 à 12 % en masse par rapport à la masse totale de la mousse PUIR renforcée.

En fonction de la quantité de liant et de la masse surfacique des mats de fibres de verre, et afin d'obtenir des propriétés mécaniques acceptables, le nombre de mats de fibres de verre varie par exemple de 4 à 12.

Les fibres de verre préférentiellement utilisées selon un second mode de réalisation sont avantageusement fabriquées à partir de roving, c'est-à-dire, un ruban plus ou moins large et aplati constitué de fibres de verre qui ne sont pas torsadées mais maintenues parallèles entre-elles. Les fibres de verre sont préférentiellement déposées selon le procédé « Webforming » de Plastech T. T. Ldt.

Les fibres de verre déposées par ce procédé présentent préférentiellement une masse linéique de 30 à 300 Tex.

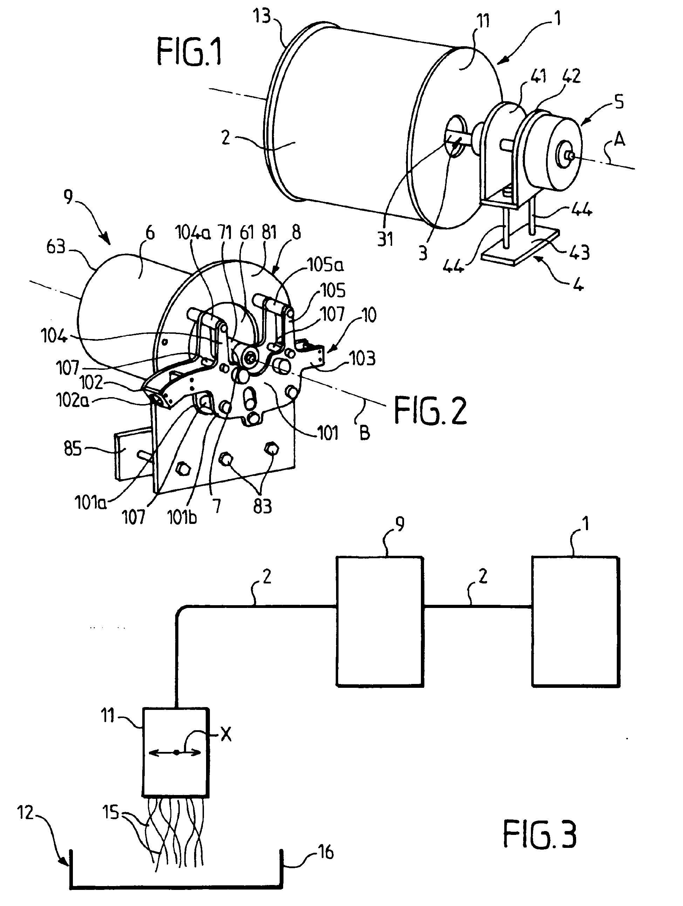

Les figures 1 à 3 illustrent le procédé « Webforming » de Plastech T. T. Ldt.

La figure 1 représente une bobine 1 de roving 2. La bobine 1 est montée autour d'un arbre de rotation 3 qui s'étend selon un axe de rotation A. Du roving 2 est enroulé autour de la bobine 1. Les surfaces d'extrémités de la bobine 1 situées dans un plan perpendiculaire à l'axe de rotation A sont dites extrémités longitudinales 11 et 13. Une des extrémités dite distale 31 de l'arbre de rotation 3 se prolonge de l'extrémité longitudinale 11 dans la direction opposée au centre de la bobine 1 et traverse successivement un support 4 et un moteur d'entraînement en rotation 5.

Le support 4 est constitué de deux plaques 41 et 42, qui sont reliées à un pied 43 au niveau de la partie inférieure (dans le sens du dessin) de leur surface radialement externe, par des tiges de soutien 44.

Le moteur d'entraînement en rotation 5 se présente sous forme d'un boîtier qui a globalement la forme d'un disque et qui comporte un servomoteur (non représenté). Le moteur d'entraînement en rotation 5 est préférentiellement équipé d'un freinage dynamique (non représenté) qui est contrôlé par un système informatique (non représenté). La vitesse d'entraînement du moteur 5 est avantageusement contrôlée par un système informatique (non représenté).

La bobine 1 sert à dévider le roving 2 avec une vitesse contrôlée par le système de freinage dynamique.

La figure 2 représente un cabestan d'alimentation 9 motorisé. Le cabestan 9 comporte un moteur d'entraînement en rotation 6 qui se présente sous forme d'un boîtier qui a globalement la forme d'un disque. Le moteur 6 entraîne un arbre de rotation 7 qui s'étend selon un axe de rotation B.

Les surfaces d'extrémités du moteur 6 situées dans un plan perpendiculaire à l'axe de rotation B sont dites extrémités longitudinales 61 et 63. Une des extrémités dite distale 71 de l'arbre de rotation 7 se prolonge de l'extrémité longitudinale 61 dans la direction opposée au centre du moteur 6. L'extrémité distale 71 traverse successivement la partie supérieure 81 d'un support 8 et se termine en vis-à-vis du milieu de la partie supérieure (dans le sens du dessin) de l'élément central 101 d'un élément régulateur de tension 10, par un disque d'entraînement 72.

La vitesse d'entraînement du moteur 6 et donc la vitesse de rotation de l'arbre de rotation 7 est avantageusement contrôlée par un système informatique (non représenté).

Le support 8 est constitué d'une plaque s'étendant perpendiculairement à l'axe de rotation B. Il comporte une partie inférieure 82 traversée de trois orifices de fixation 83. La partie inférieure 82 est associée à un élément d'accrochage 85 à un support non représenté. Il présente une partie supérieure 81 arrondie traversée par un orifice de passage 84. L'orifice de passage 84 est traversé par l'extrémité longitudinale 61 du moteur 6. Le support 8 permet de maintenir l'alignement du moteur 6 et ainsi de maintenir la position du disque d'entraînement 72.

L'élément régulateur de tension 10 comporte l'élément central 101 sus-mentionné qui est constitué de deux plaques parallèles s'étendant perpendiculairement à l'axe de rotation B. Les deux plaques 101a et 101b sont séparées par des entretoises 107. L'élément central 101 comporte en outre une branche de distribution 102, une branche d'écartement 103, une branche antérieure de mise en tension 104 et une branche postérieure de mise en tension 105.

La branche de distribution 102 s'étend radialement respectivement vers l'avant (par rapport au dessin). La branche de distribution 102 comporte au niveau de son extrémité radialement externe un orifice de distribution 102a.

La branche d'écartement 103 s'étend radialement vers l'arrière (par rapport au dessin).

La branche antérieure de mise en tension 104 s'étend vers le haut (par rapport au dessin) à partir de l'avant du milieu de la partie supérieure de l'élément central 101. La branche postérieure de mise en tension 105 s'étend vers le haut (par rapport au dessin) à partir de l'arrière du milieu de la partie supérieure de l'élément central 101. Les branches antérieure et postérieure de mise en tension 104 et 105 comportent au niveau de leur extrémité radialement externe, un cylindre 104a et 105a qui s'étend respectivement selon un axe parallèle (non représenté) à l'axe de rotation B.

La figure 3 est une représentation schématique de la chaîne de fabrication de fibres de verre 15 à partir de roving 2 selon le procédé de « Webforming » défini précédemment.

D'après la figure 3, le roving 2, est acheminé en continu de la bobine 1 vers le cabestan 9. D'après la figure 2, le roving (non représenté sur la figure 2) passe entre la partie supérieure du cylindre 105a, la partie inférieure du disque d'entraînement 72 et la partie supérieure du cylindre 104a. Puis le roving traverse l'orifice de distribution 102a. Le disque d'entraînement 72 qui frotte contre le roving, entraîne le défilement du roving et permet de régler sa vitesse. Tel qu'énoncé précédemment, la vitesse de défilement du roving 2 est contrôlée par un système informatique (non représenté).

Selon la figure 3, la chaîne de fabrication de fibres de verre 15 comporte en amont la bobine 1 (représentée schématiquement par un rectangle) qui distribue le roving 2 au cabestan 9 (représentée schématiquement par un rectangle) à une vitesse déterminée. Le cabestan 9 régule plus finement la vitesse et la tension du roving 2. Enfin, le roving 2 est guidé vers l'entrée de la tête de distribution 11 (représentée schématiquement par un rectangle). La tête de distribution 11 est disposée en vis-à-vis de la partie supérieure du tapis roulant (convoyeur) 12. La masse linéique du roving 2 se situe entre 1000 et 3000 Tex préférentiellement autour de 2400 Tex. Au sein de la tête de distribution 11, le roving 2 est séparé en fibres de verre 15 de masse linéique inférieure se situant avantageusement entre 30 et 300 Tex. La séparation du roving 2 en fibres de verre 15 de masse linéique inférieure est effectuée par des différences de pression et de flux d'air au sein de la tête de distribution 11. La pression et le flux d'air sont contrôlés par un système informatique (non représenté).

En outre, la tête de distribution 11 peut être animée d'un mouvement de translation selon les axes X (représenté) et Y (tel que défini précédemment) de façon à répartir les fibres de verre avec une orientation désordonnée ou selon des motifs et en quantité uniforme, selon ces directions et également selon l'épaisseur de l'empilement (axe Y, tel que défini précédemment). Le mouvement de la tête de distribution 11 ainsi que sa hauteur au dessus du tapis roulant sont également contrôlés par le système informatique (non représenté). Ainsi la masse surfacique de l'empilement peut être contrôlée. Dans ce mode de réalisation également, la masse surfacique est avantageusement comprise entre 300 et 900 g/m². En outre, les fibres de verre 15 constituent préférentiellement 6 à 12 % en masse par rapport à la masse totale de la mousse PUIR renforcée.

De plus, la tête de distribution 11 peut en outre distribuer du liant de façon concomitante aux fibres de verre. Avantageusement, le liant est présent en une teneur de 0 à 3% en masse de la masse totale de l'empilement de fibres de verre. Le liant utilisé pour l'ensimage des fibres de verre est préférentiellement une résine époxy.

Enfin, la tête de distribution 11 distribue préférentiellement des fibres de verre 15 à un débit de 3 kg/min. Plusieurs têtes de distribution 11, et de préférence 3, peuvent être utilisées pour obtenir un tel débit.

Pour conclure, la qualité de l'imprégnation de l'empilement de fibres de verre selon le premier ou le second mode de réalisation dépend de la réactivité et de la viscosité de la formulation mais également de la quantité de liant utilisée.

Le procédé de fabrication de la mousse PUIR se déroule avantageusement comme suit. Les différents composants de la formulation peuvent être mélangés dans un mélangeur de type mélangeur pour mousse rigide à basse pression.

Cependant, pour faciliter le traitement, l'agent d'expansion et les divers additifs sont généralement introduits dans le récipient comportant le composant polyol. Puis le mélange comportant le composant polyol et les divers additifs sont ensuite mélangés au composant isocyanate et la formulation issue de ce mélange est versée sur un empilement de fibres de verre ou de plusieurs mats de fibres de verre. L'agent d'expansion et certains additifs ou catalyseurs peuvent être ajoutés à la composition après mélange du composant polyol et du composant isocyanate.

Préférentiellement, lors d'une fabrication de mousse PUIR renforcée à grande échelle, l'empilement de fibres de verre ou de mats de fibres de verre est déplacé de manière continue (dans le sens de la longueur de la mousse) sur un tapis roulant (convoyeur) muni de parois latérales. Le récipient déversant la formulation sur l'empilement de fibres de verre ou de mats de fibres de verre se déplace latéralement (dans le sens de la largeur de la mousse) sur toute la largeur du tapis roulant entre les parois latérales (respectivement référencés par 12 et 16 sur la figure 3). Les parois latérales permettent de contenir la formulation déversée au sein l'empilement de fibres de verre ou de mats de fibres de verre de façon à obtenir une imprégnation uniforme.

Le mélange des différents composants de la formulation est effectué à température ambiante et à pression atmosphérique. De même, la formulation est préférentiellement déversée sur l'empilement de fibres de verre ou de mats de fibres de verre à température ambiante et à pression atmosphérique.

Puis, les différents composants incorporés dans la formulation qui imprègne l'empilement de fibres de verre ou de mats de fibres de verre commencent à réagir au bout d'une période appelée temps de crémage.

La réaction continue et se manifeste par un moussage de la formulation imprégnant l'empilement de fibres de verre ou des mats de fibres de verre.

Le débit de dépôt est calculé selon les connaissances de l'homme du métier en fonction de la vitesse du convoyeur, de la hauteur de bloc et la masse volumique souhaitée.

Ensuite les blocs de mousse PUIR renforcée sèchent pendant une durée comprise entre 5 et 10 min. Les blocs de mousse PUIR renforcée présentent avantageusement une épaisseur de 25 ou 35 cm.

Puis les parties supérieure et inférieure et éventuellement latérales de la mousse désormais sous forme de bloc de mousse renforcée sont retirées. Cette étape d'ébavurage permet d'obtenir des blocs de mousse de dimensions données, par exemple de 9 et/ou de 18 cm.

Lorsque ces blocs de mousse de PUIR sont destinés à isoler des cuves de méthaniers, lesdits blocs de mousse sont alors découpés transversalement au tiers de leur épaisseur afin de constituer les deux couches d'isolation primaire et secondaire. Dans ce cas, un bloc de mousse de 30 cm d'épaisseur est ébavuré et découpé de façon à former simultanément des blocs de mousse de 9 et 18 cm d'épaisseur, de façon à former respectivement les couches primaire et secondaire d'isolation. Cette unique étape de découpe à partir d'un seul bloc de mousse permet d'obtenir simultanément une couche primaire et une couche secondaire d'isolation, cc qui constitue non seulement une économie dc matière, car moins de pertes d'ébavurage sont produites, mais également une économie de temps, car une seule étape est nécessaire pour la production des deux couches d'isolation thermique.

Les exemples suivants sont donnés pour illustrer l'invention et ne sauraient être interprétés comme la limitant de quelque manière que ce soit. Sauf indication contraire, tous les pourcentages sont donnés en masse.

Les exemples suivants illustrent les résultats :
- des essais en compression en Z (c'est-à-dire dans l'épaisseur de la mousse renforcée), à chaud et à froid, qui simulent la pression au niveau des parois latérales des cuves, générée par le mouvement du gaz liquéfié au sein de la cuve ;
- des essais en traction en Y (c'est-à-dire dans la longueur de la composition de mousse renforcée) à chaud et à froid, qui simulent les déformations exercées au sein de la paroi de la cuve et notamment les déformations du type élongation dues à la dilation et de la contraction des parois des cuves lors du chargement et du déchargement de gaz liquide ;
- des essais d'inflammabilité.

Lorsque les essais en compression en Z et en traction en Y ont lieu « à chaud », ils se déroulent à température ambiante. Lorsque ces essais ont lieu « à froid », ils se déroulent dans un cryostat dans lequel la température est de -170°C (par utilisation d'azote liquide).

A l'échelle industrielle, ces essais sont effectués sur 30 à 50 prélèvements par bloc de mousse obtenu.

Les essais en compression en Z sont réalisés selon la norme ASTM D 1621 (ou équivalent).

La résistance en compression est évaluée en mesurant la pression appliquée verticalement sur la surface de chacun des échantillons, en fonction du déplacement de la surface par rapport à sa position initiale dans le sens de l'épaisseur de chaque échantillon. Ces mesures sont reportées sur une courbe dite de résistance à la compression (non représentée). Le maximum de pression appliquée avant rupture de la structure de la mousse renforcée (maximum de ladite courbe) correspond à la résistance à la compression maximale qui est désignée par la suite par « compression en Z ».

La pente de ladite courbe correspond au module d'élasticité et est désigné par la suite par « module de compression ».

Selon les applications, il pourrait être souhaitable d'utiliser des mousses présentant une forte compression en Z et un module de compression en Z faible.

Les essais en traction en Y sont réalisés selon la norme ASTM D 1623 (ou équivalent).

La résistance en traction est évaluée en mesurant la résistance à la traction appliquée sur les extrémités opposées dans le sens de la longueur des échantillons en fonction du déplacement desdites extrémités par rapport à leur position initiale. Ces mesures sont reportées sur une courbe dite de résistance à la traction (non représentée). Le maximum de traction en Y appliquée avant rupture de la structure de la mousse renforcée (maximum de ladite courbe) correspond à la résistance à la traction maximale qui est désignée par la suite « traction en Y».

La pente de ladite courbe correspond au module d'élasticité en traction en Y.

Selon les applications, il pourrait être souhaitable d'utiliser des mousses présentant une forte résistance à la traction en Y et un module d'élasticité en traction en Y faible.

Il est important de remarquer que des essais similaires peuvent être mis en oeuvre pour mesurer la résistance à la traction en X (c'cst-à-dire dans le sens de la largeur de la mousse PUIR renforcée). Mais seuls des essais de résistance à la traction en Y sont présentés par la suite car l'obtention de résultats passant les critères imposés pour une application à des cuves de méthaniers est plus difficile pour les essais en traction en Y que pour les essais en traction en X. Cette différence de résultats est due aux caractéristiques intrinsèques des mats de fibres de verre communément commercialisés.

L'étude de l'influence de la composition de la mousse PUIR sur la résistance à la compression Z est étudiée par la suite.

La formulation de différentes compositions de mousse PUIR renforcée est présentée dans le tableau I suivant.

**Tableau I: Formulation des différentes compositions de mousse PUIR, les compositions 1 à 5 étant conformes aux enseignements de l'invention et les compositions 6 et 7 ne représentant pas l'invention.**

| | Composant 1 | | | | | | | Composant 2 | Composant 3 | |
|---|---|---|---|---|---|---|---|---|---|---|
| | Polyol 1 | Polyol 2 | Polyol 3 | Catalyseur 1 | Catalyseur 2 | Emulsifiant | Retardeur de flammes | Isocyanate | Agent d'expansion | |
| | | | | | | | | | Eau | Agent physique |
| Température de traitement : 20 à 30 °C | | | | | | | | | | |
| Viscosité (mPa.s) | 3000-5000 | 200-400 | 4000-6000 | - | - | - | - | 170-300 | - | - |
| Indice OH | 500 | 250 | 245 | | | | | | - | - |
| Nature | Dérivé du sorbitol ¹ | De type Polyéther² | De type Polyester ³ | À base de Sn ⁴ | De type octanoate de K ⁵ | De type siliconé ⁶ | TCPP | MDI ⁷ | | Alcane fluoré ⁸ |
| **Composition 1** | Indice isocyanate : 110 | | | | | | | | | |
| % pondéral * | 70 | 10 | 20 | 0,01 | 0 | 0,9 | 10 | 130 | 0,91 | 0 |
| **Composition 2** | Indice isocyanate : 110 | | | | | | | | | |
| % pondéral * | 70 | 20 | 10 | 0,01 | 0 | 0,9 | 10 | 130 | 0,9 | 0 |
| **Composition 3** | Indice isocyanate : 130 | | | | | | | | | |
| % pondéral * | 70 | 10 | 20 | 0,01 | 0,5 | 1 | 10 | 158 | 1,10 | 0 |
| **Composition 4** | Indice isocyanate : 130 | | | | | | | | | |
| % pondéral * | 60 | 20 | 20 | 0,01 | 0,5 | 1 | 10 | 150 | 1,10 | 0 |
| **Composition 5** | Indice isocyanate : 130 | | | | | | | | | |
| % pondéral * | 60 | 20 | 20 | 0,01 | 0,5 | 1 | 10 | 150 | 0,37 | 6 |
| **Composition 6** | Indice isocyanate : 190 | | | | | | | | | |
| % pondéral * | 60 | 0 | 40 | 0,01 | 1 | 1,15 | 10 | 205 | 1,25 | 0 |
| **Composition 7** | Indice isocyanate : 110 | | | | | | | | | |
| % pondéral * | 80 | 20 | 0 | 0,01 | 0,5 | 0,9 | 10 | 138 | 0,91 | 0 |

| | | | | | | | | | | |
|---|---|---|---|---|---|---|---|---|---|---|
| *par rapport à la masse totale des polyols ¹Daltolac R500 de Huntsman ⁵ Dabco K15 de Air Products ²Caradol ET250-02 de Shell Chemical ⁶ Tegostab 8804 de Goldsmith ³ Stepanpol 2352 de Stepan ⁷ Suprasec 5005 de Huntsman ⁴de type DBTDL Dabco T12N de Air Products ⁸ Solkane 365mfc de Solvay | | | | | | | | | | |

Les différents éléments du composant 1 du tableau I sont mélangés uniformément. Puis les composants 2 et 3 sont successivement ajoutés au composant 1. Les formulations ainsi obtenues sont coulées sur un empilement de 8 mats de fibre de verre de façon à ce que la mousse PUTR renforcée présente une teneur en fibres de 9% et une masse volumique de 130kg/m³. Dans ces essais, la masse surfacique et le taux de liant des mats de fibres de verre sont respectivement de 450g/m² et de 0,8%.

Après stabilisation, des essais de résistance à la compression en Z à chaud et à froid sont effectués, à l'échelle laboratoire, sur chacune des compositions précédentes.

Les résultats de ces essais sont présentés dans le tableau II suivant. Toutes les valeurs présentées concernent des compositions de mousse dont la valeur de la masse volumique a été extrapolée à 130 kg/m³, de façon à pouvoir comparer leurs propriétés mécaniques. Cette extrapolation est possible car la relation entre la masse volumique et les propriétés mécaniques des compositions de mousse renforcée est linéaire dans ce domaine de masse volumique.

La mesure du taux de cellules fermées selon la norme ASTM D 2856 (procédure B) et des essais d'inflammabilité selon la norme DIN 4102-1 ont également été effectués sur chacune des formulations précédentes.

Dans tous les tableaux qui suivent, les résultats présentés sont une moyenne des valeurs obtenues à partir de tous les échantillons testés.

**Tableau II : Résultats des essais en compression en Z de différentes compositions de mousse PUIR**

| Composition | Spécification | 1 | 2 | 3 | 4 | 5 | 6 | 7 |
|---|---|---|---|---|---|---|---|---|
| Indice isocyanate | - | 110 | 110 | 130 | 130 | 130 | 190 | 110 |
| Inflammabilité | DIN 4102-1 | **B3** | **B3** | B2 | B2 | B2 | B2 | **B3** |
| Taux de cellules fermées | >92% | 92 | 92,2 | 93 | 94 | 94 | 93 | 93 |
| A chaud (20°C) | | | | | | | | |
| Compression en Z (MPa) | Supérieure à 1,6 | 1,6 | **1,52** | 1,73 | 1,65 | 1,61 | 1,75 | 1,6 |
| Module en compression Z (MPa) | Entre 50 et 80 | 75 | 71 | 75 | 69 | 71 | 76 | 73 |

| A froid (-170°C) | | | | | | | | |
|---|---|---|---|---|---|---|---|---|
| Compression en Z (MPa) | Supérieure à 3 | 3,7 | 3,5 | 3,2 | 3,4 | 3,2 | **2,35** | 3,2 |
| Module en compression Z (MPa) | Inférieur à 130 | 117 | 120 | 125 | 126 | 128 | 117 | **136** |

| | | | | | | | | |
|---|---|---|---|---|---|---|---|---|
| B3 signifie : ne satisfait pas aux critères de la norme DIN 4102-1 | | | | | | | | |
| B2 signifie : satisfait aux critères de la norme DIN 4102-1 | | | | | | | | |

Dans le tableau II et les tableaux suivants, les résultats qui ne respectent pas les critères imposés pour une application à des cuves de méthaniers sont mis en évidence en gras. La colonne « spécification » présente, dans le tableau II, l'ensemble des critères à l'échelle laboratoire imposés par la société déposante pour une application à des cuves de méthanier.

A chaud (20°C), toutes les compositions présentent des résultats de résistance à la compression en Z globalement satisfaisants. Cependant, pour une application à des cuves de méthaniers, les compositions 3 et 4, d'indice isocyanate de 130, présentent les meilleurs résultats.

A froid (-170°C), toutes les compositions, à l'exception de la composition 6 dont l'indice isocyanate est très supérieur à l'indice isocyanate revendiqué, et qui comporte deux polyols uniquement, présentent une résistance à la compression en Z supérieure à 3 MPa.

Il est intéressant de noter que les formulations d'indice isocyanate de 110 présentent une bonne résistance mécanique mais une résistance à l'inflammabilité inférieure à celle des compositions d'indice isocyanate supérieur.

Pour conclure, afin d'obtenir le meilleur compromis entre les caractéristiques de résistance à la compression à chaud et à froid et de résistance à l'inflammabilité, il apparaît que trois polyols sont nécessaires pour la composition selon la présente invention.

En outre, la composition 4, qui incorpore 60% de premier polyol, 20% de deuxième polyol et 20% de troisième polyol par rapport à la masse totale du composant polyol, est la composition qui imprègne le mieux les mats de fibres de verre, ce qui engendre une meilleure homogénéité de la mousse PUIR renforcée.

L'étude de l'influence des caractéristiques des mats de fibre de verre et de la masse volumique totale de la mousse PUIR renforcée dans la résistance à la compression en Z, la résistance à la traction en Y est étudiée par la suite.

Différentes compositions de mousse de PUIR renforcée étudiées à l'échelle industrielle, sont présentées dans le tableau III suivant.

**Tableau III : Composition de différentes mousses PUIR renforcées**

| Composition | Masse volumique moyenne (kg/m³) | Taux de fibres* | Nombre de couches de mats de fibres de verre | Masse surfacique des mats de fibre de verre (g/m²) | Taux de liant * |
|---|---|---|---|---|---|
| 8 | 123 | 11,1 | 10 | 450 | 2,5 |
| 9 | 132,5 | 7,6 | 8 | 450 | 2,5 |
| 10 | 131,5 | 11,1 | 7 | 600 | 0,8 |
| 11 | 132,5 | 10,1 | 8 | 600 | 2,5 |
| 12 | 131 | 11,3 | 10 | 450 | 2,5 |

| | | | | | |
|---|---|---|---|---|---|
| * % en masse par rapport à la masse totale de la mousse renforcée | | | | | |

Les différentes compositions 8 à 12 ci-dessus sont basées sur la composition 4 précédente mais incorporent des mats de fibres présentant des caractéristiques de masse surfacique, de taux de liant, de taux de fibres et de nombre de couches de fibres de verre, différentes.

La masse volumique moyenne et l'ensemble des résultats suivants sont calculés en faisant la moyenne des résultats obtenus à tous les niveaux de la mousse de PUIR renforcée dans le sens de l'épaisseur (bas, milieu et haut).

Les résultats des essais de résistance à la compression en Z et de résistance à la traction en Y à chaud, sont présentés dans le tableau IV suivant. La colonne « spécification » présente par la suite, l'ensemble des critères, à l'échelle industrielle, imposés par la société déposante pour un application à des cuves de méthanier.

**Tableau IV : Essais de résistance à la compression en Z et de résistance à la traction en Y à chaud (20°C)**

| Composition | Spécification (MPa) | 8 | 9 | 10 | 11 | 12 |
|---|---|---|---|---|---|---|
| Compression en Z (MPa) | Supérieure à 1,5 | **1,42** | **1,47** | 1,72 | 1,62 | 1,65 |
| Déviation (en MPa)* | La plus faible possible | 0,17 | 0,12 | 0,11 | 0,23 | 0,2 |
| Module de compression en Z (MPa) | Inférieur à 80 | 60 | 65 | 70 | 75 | 70 |
| Déviation (en MPa)* | La plus faible possible | 10,9 | 8,2 | 7,3 | 9,1 | 6,0 |
| Traction en Y (MPa.s) | Supérieure à 2,4 | 2.95 | 2,2 | 2,55 | 3,1 | 3,2 |
| Déviation (en MPa)* | La plus faible possible | 0,95 | 0,72 | 0,23 | 0,65 | 1,2 |
| Module de traction en Y (MPa) | Inférieur à 150 | 122 | 92 | 112 | 125 | 133 |
| Déviation (en MPa)* | La plus faible possible | 40,5 | 51 | 20 | 48 | 35 |

| | | | | | | |
|---|---|---|---|---|---|---|
| * déviation : écart entre les échantillons d'une même composition présentant le plus petit et le plus grand résultat | | | | | | |

Les résultats des essais de résistance à la compression en Z et de résistance à la traction en Y à froid, sont présentés dans le tableau V suivant.

**Tableau V : Essais de résistance à la compression en Z et de résistance à la traction en Y à froid (-170°C)**

| Composition | Spécification (MPa) | 8 | 9 | 10 | 11 | 12 |
|---|---|---|---|---|---|---|
| Compression en Z (MPa) | Supérieure à 2,7 | **2,65** | 2.71 | 2,87 | 3,12 | 2,95 |
| Déviation (en MPa)* | La plus faible possible | 0,31 | 0,23 | 0,33 | 0,7 | 0,26 |
| Module de compression en Z (MPa) | Inférieur à 130 | 116 | 111 | 120 | 125 | 113 |
| Déviation (en MPa)* | La plus faible possible | 21 | 26 | 12 | 18 | 22 |
| Traction en Y (MPa.s) | Supérieure à 2,7 | NM | 2,65 | **1,6** | 3,41 | 3,4 |
| Déviation (en MPa)* | La plus faible possible | NM | 0,71 | 1,14 | 0,85 | 1,75 |
| Module de traction en Y (MPa) | Inférieur à 190 | NM | 177 | 152 | 215 | 167 |
| Déviation (en MPa)* | La plus faible possible | NM | 58 | 40 | 61 | 42 |

| | | | | | | |
|---|---|---|---|---|---|---|
| NM : non mesuré | | | | | | |
| * déviation : écart entre les échantillons d'une même composition présentant le plus petit et le plus grand résultat | | | | | | |

Bien que l'ensemble des formulations donne des résultats globalement satisfaisants tant en résistance à la traction en Y qu'en en résistance à la compression en Z, la formulation 11 présente en globalité, les_meilleures performances en moyenne à chaud et à froid.

Cependant, il est à noter que, à chaud, la formulation 9 dont le taux de fibres est le plus faible (7,6%), conduit à des performances légèrement inférieures à chaud.

En outre, la formulation 10, dont le taux de liant est le plus faible (0,8%) conduit à des performances légèrement inférieures à froid.

De même, la formulation 8, dont la masse volumique est la plus faible présente des performances légèrement inférieures à chaud et à froid.

Les formulations de la présente invention présentent un rapport module/résistance en compression favorable, de l'ordre 35 à 45. Cette caractéristique confère à la mousse PUIR renforcée un excellent compromis entre résistance et souplesse.

Enfin, la mesure de la qualité de la mousse par la mesure du taux de cellules fermées selon la norme ASTM D 2856 (procédure B) et des essais d'inflammabilité selon la norme DIN 4102-1 ont également été effectués sur chacune des formulations précédentes et sont présentés dans le tableau VI suivant.

**Tableau VI : Mesure du taux de cellules fermées et essais d'inflammabilité**

| Composition | Spécification | 8 | 9 | 10 | 11 | 12 |
|---|---|---|---|---|---|---|
| Densité de mousse moyenne (en kg/m³)* | - | 123 | 122 | 131,5 | 132,5 | 131 |
| Déviation | La plus petite possible | 8,3 | 9,5 | 5,8 | 11,0 | 8,8 |
| Inflammabilité | DIN 4102-1 (B2) | B2 | B2 | B2 | B2 | B2 |
| Taux de cellules fermées | >92% | 92 | 93 | 93 | 94 | 92 |

| | | | | | | |
|---|---|---|---|---|---|---|
| * déviation : écart entre les échantillons d'une même composition présentant le plus petit et le plus grand résultat | | | | | | |

L'ensemble des formulations 8 à 12 donne des résultats très satisfaisants tant en résistance à l'inflammabilité qu'en taux de cellules fermées.

En conclusion, l'ensemble des formulations ci-dessus présentent des caractéristiques de résistance mécaniques très satisfaisantes et peuvent être appliquées à des domaines techniques tels que le bâtiment, l'automobile. Les formulations qui satisfont en outre aux critères imposés par la société déposante susmentionnés peuvent également être appliqués à des cuves de méthaniers, domaine technique où les contraintes de déformation et de dilatation sont plus importantes.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Mousse de polyuréthanne/polyisocyanurate renforcée par des fibres de verre, étant obtenue :
1) par la mise en contact :
• d'un composant isocyanate présentant une viscosité comprise entre 200 et 600 mPa.s à 25 °C,
• d'un composant polyol comportant un premier polyol, dérivé du_sorbitol, un deuxième polyol de type polyéther et un troisième polyol de type_polyester, lesdits polyols présentant une viscosité comprise entre 200 et 6000 mPa.s à 25°C,
en présence :
• de catalyseurs choisis parmi les sels d'étain, les carboxylates de potassium et éventuellement les amines tertiaires,
• d'un agent d'expansion physique et/ou chimique,
• d'un émulsifiant et
• éventuellement d'un retardeur de flamme,
2) par l'imprégnation, par la formulation issue de l'étape 1), d'un empilement de fibres de verre, et
3) par l'expansion et la solidification de ladite formulation de façon à former un bloc de mousse renforcée contenant l'empilement de fibres de verre ;
ledit bloc de mousse renforcée présentant une masse volumique moyenne comprise entre 115 et 135 kg/m³, de préférence entre 120 et 130 kg/m³, plus avantageusement autour de 130 kg/m³ et un indice isocyanate compris entre 100 et 180, de préférence entre 130 et 180.

2. Mousse selon la revendication 1, **caractérisée en ce que** ledit composant isocyanate est du diisocyanate de méthylène diphényle (MDI) présentant une fonctionnalité moyenne comprise entre 2,5 et 3,5, de préférence entre 2,9 et 3,1.

3. Mousse selon la revendication 1 ou 2, **caractérisée en ce que** ledit composant polyol est constitué desdits premier, deuxième et troisième polyols, **en ce que** ledit premier polyol est compris dans des proportions de 10 à 80% en masse par rapport à la masse totale dudit composant polyol, **en ce que** ledit deuxième polyol est compris dans des proportions de 10 à 80% en masse par rapport à la masse totale dudit composant polyol et **en ce que** ledit troisième polyol est compris dans des proportions de 10 à 80% en masse par rapport à la masse totale dudit composant polyol.

4. Mousse selon la revendication 3, **caractérisée en ce que** le premier polyol est compris dans des proportions de 60 à 70 % en masse par rapport à la masse totale dudit composant polyol, **en ce que** le deuxième polyol est compris dans des proportions entre 10 et 20 % en masse par rapport à la masse totale dudit composant polyol et **en ce que** le troisième polyol est compris dans des proportions entre 10 et 20 % en masse par rapport à la masse totale dudit composant polyol, la somme des proportions du premier, du second et du troisième polyols étant égale à 100 % de la masse totale dudit composant polyol.

5. Mousse selon l'une des revendications 1 à 4, **caractérisée en ce que** les proportions en masse des premier, deuxième et troisième polyols par rapport à la masse dudit composant polyol sont de 60%, 20% et 20% respectivement.

6. Mousse selon l'une des revendications 1 à 5, **caractérisée en ce que** les catalyseurs sont choisis parmi les sels d'étain et les carboxylates de potassium, à l'exclusion des amines tertiaires.

7. Mousse selon l'une des revendications 1 à 6, **caractérisée en ce que** ledit agent d'expansion est de l'eau.

8. Mousse selon l'une des revendications 1 à 7, **caractérisée en ce que** ledit agent d'expansion est du HCF-365mfc ou du HCF-245fa.

9. Mousse selon l'une des revendications 1 à 8, **caractérisée en ce que** ledit retardeur de flamme est de type non halogéné.

10. Mousse selon l'une des revendications 1 à 9, **caractérisée en ce que** ledit empilement de fibres de verre est sous forme d'un empilement de mats de fibres de verre.

11. Mousse selon la revendication 10, dont les fibres de verre présentent une masse linéique de 20 à 40 Tex, de préférence de 30 Tex.

12. Mousse selon l'une des revendications 1 à 10, **caractérisée en ce que** ledit empilement de fibres de verre comporte des fibres de verre continues fabriquées à partir de roving.

13. Mousse selon la revendication 12, dont les fibres de verre présentent une masse linéique de 30 à 300 Tex.

14. Mousse selon la revendication 12 ou 13, **caractérisée en ce que** la fabrication desdites fibres de verre continues est réalisée par un procédé comportant une étape de séparation de roving en fibres de verre continues de masse linéique inférieure à celle du roving.

15. Mousse selon l'une des revendications 1 à 14, **caractérisée en ce que** lesdites fibres de verre sont associées entre elles par un liant.

16. Mousse selon la revendication 15, **caractérisée en ce que** la teneur en ledit liant est comprise entre 0,6 et 3% ; de préférence autour de 2,5% en masse desdites fibres de verre.

17. Mousse selon la revendication 12 ou 14, caractérisée en ce lesdites fibres de verre ne sont pas associées par un liant.

18. Mousse selon l'une des revendications 1 à 17, **caractérisée en ce que** ledit empilement de fibres de verre présente une masse surfacique comprise entre 300 à 900 g/m², de préférence de 450 g/m².

19. Mousse selon l'une des revendications 1 à 18, **caractérisée en ce que** les fibres de verre constituent 7 à 13%, de préférence 10 à 12% en masse de la masse totale du bloc de mousse renforcée.

20. Mousse selon l'une des revendications 1 à 19, dont l'inflammabilité est conforme au test DIN 4102-1 (B2).

21. Mousse selon l'une des revendications 1 à 20, se présentant sous la forme d'un bloc de mousse d'une épaisseur comprise entre 20 et 35 cm.

22. Procédé de fabrication d'une mousse de polyuréthanne/polyisocyanurate renforcée par des fibres de verre comportant les étapes consistant à :
1) mettre en contact :
• un composant isocyanate présentant une viscosité comprise entre 200 et 600 mPa.s à 25 °C,
• un composant polyol comportant un premier polyol, dérivé du sorbitol, un deuxième polyol de type polyéther et un troisième polyol de type polyester, lesdits polyols présentant une viscosité comprise entre 200 et 6000 mPa.s à 25 °C,
en présence :
• de catalyseurs choisis parmi les sels d'étain, les carboxylates de potassium et éventuellement les amines tertiaires,
• d'un agent d'expansion,
• d'un émulsifiant
• éventuellement d'un retardeur de flamme,
2) imprégner, par la formulation issue de l'étape 1), un empilement de fibres de verre,
3) laisser solidifier ladite formulation après expansion de façon à former un bloc de mousse contenant l'empilement de fibres de verre ;
4) ébavurer les parties supérieure, inférieure et éventuellement latérales dudit bloc de mousse et éventuellement
5) découper ledit bloc de mousse transversalement, de façon à obtenir une couche primaire d'isolation et une couche secondaire d'isolation.

23. Utilisation de la mousse selon l'une quelconque des revendications précédentes dans l'isolation thermique de cuves de transport de gaz liquéfié, et notamment de cuves de méthanier.

## Patentansprüche

1. Mit Glasfasern verstärkter Polyurethan-/Polyisocyanuratschaum, den man wie folgt erhält:
1) durch Kontakt:
• mit einer Isocyanat-Komponente bei 25 °C, die eine Viskosität zwischen 200 und 600 mPa.s aufweist,
• mit einer Polyol-Komponente, die ein erstes, aus Sorbit abgeleitetes Polyol, ein zweites Polyol vom Typ Polyether und ein drittes Polyol vom Typ Polyester aufweist, wobei die Polyole eine Viskosität zwischen 200 und 6000 Pa.s aufweisen, bei 25 °C
in Gegenwart von:
• Katalysatoren, die ausgewählt sind aus Zinnsalzen, Kaliumkarboxylaten und eventuell tertiären Aminen,
• eines physikalischen und/oder chemischen Treibmittels,
• eines Emulgators und
• eventuell eines Flammhemmers,
2) durch Imprägnierung, durch die aus Schritt 1) resultierende Formulierung,
eines Glasfaserstapels, und
3) durch Expansion und Verfestigung der Formulierung, so dass ein Block aus verstärktem Schaum gebildet wird, der den Glasfaserstapel enthält;
wobei der Block aus verstärktem Schaum eine mittlere Dichte zwischen 115 und 135 kg/m³, vorzugsweise zwischen 120 und 130 kg/m³, weiter bevorzugt um 130 kg/m³, und einen Isocyanat-Index zwischen 100 und 180, vorzugsweise zwischen 130 und 180, aufweist.

2. Schaum nach Anspruch 1, **dadurch gekennzeichnet, dass** die Isocyanat-Komponente Methylendiphenyldiisocyanat (MDI) ist, das eine mittlere Funktionalität zwischen 2,5 und 3,5, vorzugsweise zwischen 2,9 und 3,1, aufweist.

3. Schaum nach Anspruch 1 oder 2, **dadurch gekennzeichnet, dass** die Polyol-Komponente die ersten, zweiten und dritten Polyole aufweist, dass das erste Polyol gegenüber der Gesamtmasse der Polyol-Komponente Massenanteile von 10 bis 80 % aufweist, dass das zweite Polyol gegenüber der Gesamtmasse der Polyol-Komponente Massenanteile von 10 bis 80 % aufweist, und dass das dritte Polyol gegenüber der Gesamtmasse der Polyol-Komponente Massenanteile von 10 bis 80 % aufweist.

4. Schaum nach Anspruch 3, **dadurch gekennzeichnet, dass** das erste Polyol gegenüber der Gesamtmasse der Polyol-Komponente Massenanteile von 60 bis 70 % aufweist, dass das zweite Polyol gegenüber der Gesamtmasse der Polyol-Komponente Massenanteile zwischen 10 und 20 % aufweist, und dass das dritte Polyol gegenüber der Gesamtmasse der Polyol-Komponente Massenanteile zwischen 10 bis 20 % aufweist, wobei die Summe der Anteile des ersten, zweiten und dritten Polyols gleich 100% der Gesamtmasse der Polyol-Komponente entspricht.

5. Schaum nach einem der Ansprüche 1 bis 4, **dadurch gekennzeichnet, dass** die Massenanteile des ersten, zweiten und dritten Polyols gegenüber der Masse der Polyol-Komponente 60%, 20% bzw. 20% betragen.

6. Schaum nach einem der Ansprüche 1 bis 5, **dadurch gekennzeichnet, dass** die Katalysatoren aus Zinnsalzen und Kaliumkarboxylaten unter Ausschluss von tertiären Aminen ausgewählt sind.

7. Schaum nach einem der Ansprüche 1 bis 6, **dadurch gekennzeichnet, dass** das Treibmittel Wasser ist.

8. Schaum nach einem der Ansprüche 1 bis 7, **dadurch gekennzeichnet, dass** das Treibmittel HCF-365mfc oder HCF-245fa ist.

9. Schaum nach einem der Ansprüche 1 bis 8, **dadurch gekennzeichnet, dass** der Flammhemmer halogenfrei ist.

10. Schaum nach einem der Ansprüche 1 bis 9, **dadurch gekennzeichnet, dass** der Glasfaserstapel die Form eines Stapels von Glasfasermatten hat.

11. Schaum nach Anspruch 10, dessen Glasfasern eine lineare Dichte oder Feinheit von 20 bis 40 Tex, vorzugsweise von 30 Tex, aufweisen.

12. Schaum nach einem der Ansprüche 1 bis 10, **dadurch gekennzeichnet, dass** der Glasfaserstapel kontinuierliche Glasfasern aufweist, die aus Rovings hergestellt sind.

13. Schaum nach Anspruch 12, dessen Glasfasern eine lineare Dichte oder Feinheit von 30 bis 300 Tex aufweisen.

14. Schaum nach Anspruch 12 oder 13, **dadurch gekennzeichnet, dass** die Herstellung der kontinuierlichen Glasfasern durch ein Verfahren erfolgt, das einen Schritt des Trennens des Roving aus kontinuierlichen Glasfasern mit einer linearen Dichte oder Feinheit aufweist, die unter der des Roving liegt.

15. Schaum nach einem der Ansprüche 1 bis 14, **dadurch gekennzeichnet, dass** die Glasfasern untereinander durch ein Bindemittel verbunden sind.

16. Schaum nach Anspruch 15, **dadurch gekennzeichnet, dass** der Anteil an Bindemittel zwischen 0,6 und 3 Massen-%, vorzugsweise bei 2,5 Massen-% der Glasfasern liegt.

17. Schaum nach Anspruch 12 oder 14, **dadurch gekennzeichnet, dass** die Glasfasern nicht durch ein Bindemittel verbunden sind.

18. Schaum nach einem der Ansprüche 1 bis 17, **dadurch gekennzeichnet, dass** der Glasfaserstapel eine flächenbezogene Masse zwischen 300 und 900 g/m², vorzugsweise 450 g/m² aufweist.

19. Schaum nach einem der Ansprüche 1 bis 18, **dadurch gekennzeichnet, dass** die Glasfasern 7 bis 13 Massen-%, vorzugsweise 10 bis 12 Massen-% der Gesamtmasse des Blockes aus verstärktem Schaum

20. Schaum nach einem der Ansprüche 1 bis 19, dessen Entflammbarkeit dem Test DIN 4102-1 (B2) entspricht.

21. Schaum nach einem der Ansprüche 1 bis 20, der die Form eines Schaumblockes einer Stärke zwischen 20 und 35 cm aufweist.

22. Herstellungsverfahren für einen mit Glasfasern verstärkter Polyurethan/Polyisocyanuratschaum, der die folgenden Schritte aufweist:
Inkontaktbringen:
• einer Isocyanat-Komponente, die eine Viskosität zwischen 200 und 600 mPa.s, bei 25 °C,
• einer Polyol-Komponente, die ein erstes, aus Sorbit abgeleitetes Polyol, ein zweites Polyol vom Typ Polyether und ein drittes Polyol vom Typ Polyester aufweist, wobei die Polyole eine Viskosität zwischen 200 und 6000 Pa.s aufweisen, bei 25 °C,
in Gegenwart von:
• Katalysatoren, die ausgewählt sind aus Zinnsalzen, Kaliumkarboxylaten und eventuell tertiären Aminen,
• eines Treibmittels,
• eines Emulgators
• eventuell eines Flammhemmers,
1) Imprägnieren, durch die aus Schritt 1) resultierende Formulierung, eines Glasfaserstapels,
3) Verfestigen lassen der Formulierung nach Expansion, so dass ein Schaumblock gebildet wird, der den Glasfaserstapel enthält;
4) Entgraten der oberen, unteren und eventuell seitlichen Abschnitte des Schaumblockes und eventuell
5) Querschneiden des Schaumblockes, um eine erste Isolierschicht und eine zweite Isolierschicht zu erhalten.

23. Verwendung des Schaumes nach einem der vorhergehenden Ansprüche in der Wärmeisolierung von Transportbehältern für Flüssiggas, und insbesondere Behältern auf Flüssiggastankern

## Claims

1. A glass fiber reinforced polyurethane/polyiso-cyanurate foam obtained by:
1) contacting:
an isocyanate component having a viscosity of between 200 and 600 mPa.s at 25°C,
a polyol component comprising a first polyol derived from sorbitol , a second polyol of the polyether type and a third polyol of the polyester type, said polyols having a viscosity of between 200 and 6000 mPa.s at 25°C,
in the presence of:
catalysts selected from tin salts, potassium carboxylates and optionally tertiary amines,
a physical and/or chemical blowing agent,
an emulsifier, and
optionally a flame retardant,
2) impregnating, with the formulation obtained from step 1, a glass fiber stack, and
3) expanding and solidifying said formulation to form a reinforced foam block containing the glass fiber stack;
said reinforced foam block having an average density of between 115 and 135 kg/m³, preferably between 120 and 130 kg/m³, more advantageously around 130 kg/m³, and an isocyanate index of between 130 and 180.

2. The foam as claimed in claim 1, **characterized in that** the said isocyanate component is methylenediphenyl diisocyanate (MDI) having an average functionality of between 2.5 and 3.5, preferably between 2.9 and 3.1.

3. The foam as claimed in one of claims 1 to 2, **characterized in that** the said polyol component is composed of said first, second, and third polyols, wherein said first polyol is present in proportions from 10% to 80% by mass relative to the total mass of said polyol component, wherein said second polyol is present in proportions from 10% to 80% by mass relative to the total mass of said polyol component, and wherein said third polyol is present in proportions from 10% to 80% by mass relative to the total mass of said polyol component.

4. The foam as claimed in claim 3, **characterized in that** the first polyol is present in proportions from 60% to 70% by mass relative to the total mass of said polyol component, **in that** the second polyol is present in proportions from 10% to 20% by mass relative to the total mass of said polyol component, and **in that** the third polyol is present in proportions from 10% to 20% by mass relative to the total mass of said polyol component, the sum of the proportions of said first polyol, second polyol and third polyol being equal to 100%.

5. The foam as claimed in claim 1, **characterized in that** the proportions by mass of the first, second, and third polyols relative to the mass of said polyol component are 60%, 20%, and 20% respectively.

6. The foam as claimed in one of claim 1 to 5, wherein the catalysts are selected from tin salts and potassium carboxylates to the exclusion of tertiary amines.

7. The foam as claimed in one of claim 1 to 6, **characterized in that** the blowing agent is water.

8. The foam as claimed in one of claim 1 to 7, **characterized in that** the blowing agent is HCF-365mfc or HCF-245fa.

9. The foam as claimed in one of claim 1 to 8, **characterized in that** the said flame retardant is nonhalogenated.

10. The foam as claimed in one of claim 1 to 9, **characterized in that** the said glass fiber stack is in the form of a stack of glass fiber mats.

11. The foam as claimed in claim 10, whose glass fibers have a linear density of 20 to 40 tex, preferably 30 tex.

12. The foam as claimed in one of claims 1 to 10, **characterized in that** said glass fiber stack comprises continuous glass fibers manufactured from roving.

13. The foam as claimed in claim 12, whose glass fibers have a linear density of 30 to 300 tex.

14. The foam as claimed in claim 12 or 13, **characterized in that** said continuous glass fibers are produced by a process comprising a step of separating continuous glass fiber roving whose linear density is less than that of the roving.

15. The foam as claimed in one of claim 1 to 14, **characterized in that** said glass fibers are associated with one another by a binder.

16. The foam as claimed in claim 15, **characterized in that** the amount of said binder is between 0.6% and 3%, preferably around 2.5% by mass of said glass fibers.

17. The foam as claimed in claim 12 or 14, **characterized in that** said glass fibers are not associated by a binder.

18. The foam as claimed in one of claim 1 to 17, **characterized in that** said glass fiber stack has a grammage of between 300 to 900 g/m², preferably 450 g/m².

19. The foam as claimed in one of claim 1 to 18, **characterized in that** the glass fibers constitute 7% to 13%, preferably 10% to 12% by mass of the total mass of the reinforced foam block.

20. The foam as claimed in one of claim 1 to 19, whose flammability is in accordance with the DIN 4102-1 (B2) test.

21. The foam as claimed in one of claim 1 to 20, in the form of a foam block with a thickness of between 20 and 35 cm.

22. A process for producing a glass fiber reinforced polyurethane/polyisocyanurate foam, comprising the steps of:
1) contacting:
an isocyanate component having a viscosity of between 200 and 600 mPa.s at 25°C,
a polyol component comprising a first polyol derived from sorbitol, a second polyol of the polyether type and a third polyol of the polyester type, said polyols having a viscosity of between 200 and 6000 mPa.s at 25°C,
in the presence of:
catalysts selected from tin salts, potassium carboxylates, and, optionally tertiary amines,
a blowing agent,
an emulsifier
optionally a flame retardant,
2) impregnating, with the formulation obtained from step 1, a glass fiber stack,
3) causing said formulation to solidify after expansion, so as to form a foam block containing the glass fiber stack,
4) trimming the top, bottom, and, optionally, side parts of said foam block, and optionally
5) cutting said foam block transversely, to give a primary insulating layer and a secondary insulating layer.

23. The use of the foam as claimed in any one of the preceding claims in the thermal insulation of liquefied gas transport tanks, and especially of liquefied gas tanker tanks.
